# FASCICULE DE BREVET EUROPEEN

(11) **EP 1 224 113 B1**
(45) Date de publication et mention de la délivrance du brevet: **30.07.2003**
(21) Numéro de dépôt: 00971511.1
(22) Date de dépôt: 26.10.2000
(51) Int. Cl.: B63B 25/16, F17C 3/02, B63B 5/16, B63B 35/44, F28D 15/02

(54) **BARGE DE STOCKAGE DE GAZ LIQUEFIE A STRUCTURE FLOTTANTE EN BETON**
LEICHTER ZUM LAGERN VON FLÜSSIGGAS, BESTEHEND AUS EINER SCHWIMMFÄHIGEN BETONSTRUKTUR
LIQUEFIED GAS STORAGE BARGE WITH CONCRETE FLOATING STRUCTURE

(30) Priorité: 27.10.1999 FR 9913689
(43) Date de publication de la demande: 24.07.2002
(73) Titulaire: SAIPEM S.A., 78180 Montigny-le-Bretonneux (FR)
(72) Inventeur: MARCHAND, Denis, F-78000 Versailles (FR); JOUANNEAUX, Catherine, F-78620 Dampierre-en-Yvelines (FR); PRAT, Christophe, F-75018 Paris (FR)
(74) Mandataire: Domange, Maxime
(86) Numéro de dépôt international: FR0002981
(87) Numéro de publication internationale: WO01030648

(56) Documents cités:
- DE-A- 2 644 856
- DE-B- 2 361 224
- US-A- 3 457 890
- US-A- 3 828 708
- US-A- 4 275 679
- NN.: "The Dytan design of a concrete constructed LNG carrier" SHIPPING WORLD AND SHIPBUILDER., vol. 169, no. 3924, décembre 1976 (1976-12), pages 1021-1022, XP002142028 BENN PUBLICATIONS LTD. LONDON., GB ISSN: 0037-3931
- ANDERSON ARTHUR R: "Design and Construction of a 375,000 bbl Prestressed Concrete Floating LPG Storage Facility for the Java Sea" ANNUAL OFFSHORE TECHNOLOGY CONFERENCE, no. OTC 2487, 3 - 6 mai 1976, pages 673-688, XP002142029 HOUSTON, TX, US

## Description

La présente invention concerne le stockage de produits liquides dans une structure de béton pouvant être déplacée en flottaison.

Plus précisément, la présente invention concerne une barge de stockage en mer de gaz liquéfié, constituée essentiellement par une structure flottante en béton armé et précontraint contenant des réservoirs pour gaz liquéfiés maintenus à des températures cryogéniques, notamment inférieures à - 100°C.

Le stockage des gaz liquéfiés tels que le méthane se fait, soit dans des réservoirs auto porteurs, cylindriques, sphériques ou prismatiques, réalisés à partir de tôles d'acier spécial ou d'aluminium de forte épaisseur, soit encore dans des réservoirs constitués d'une membrane mince, jouant le rôle de confinement étanche, associée à un système d'isolation thermique constitué de blocs de mousse, ce dernier reposant de manière continue sur une structure porteuse.

Dans cette dernière configuration, la membrane est ainsi dimensionnée pour n'assurer que le confinement étanche du liquide, la résistance mécanique de l'ensemble étant assurée par la structure porteuse extérieure non soumise au froid cryogénique.

On connaît notamment par le brevet Français N°2 271 497 de tels systèmes de confinement et d'isolation adaptés aux navires méthaniers et aux stockages à terre, développés entre autres par la Société Gaz Transport & Technigaz (Trappes - France).

Les navires équipés pour recevoir des réservoirs de stockage cryogénique sont habituellement construit en acier par des chantiers navals spécialisés. Dans le cas du méthane liquide, du fait que la densité du produit est faible (d≅0.47), la configuration de tels navires est très particulière et en raison du coût élevé de la réalisation des citernes isolées thermiquement, les navires méthaniers sont d'un coût extrêmement élevé. Ils nécessitent en outre beaucoup de précautions dans leur exploitation, car en cas de fuite de gaz liquéfié sur les éléments de structure de la coque en acier du navire, l'acier devient cassant et, ne résistant plus aux contraintes d'environnement, conduit à la ruine du navire.

Des structures flottantes similaires en béton ont été envisagées en raison du bon comportement du béton lorsqu'il est mis en contact avec du gaz liquéfié à très basse température, mais de telles structures dont l'objectif est de naviguer, sont beaucoup plus volumineuses et massives que des navires en acier, et conduisent à des ensembles non compétitifs économiquement par rapport à leur équivalent en acier. De plus, leur tirant d'eau nécessite pour leur construction l'utilisation de cales sèches ou de formes de bassin profondes, de manière à ce qu'il soit possible de les déplacer vers des eaux plus profondes après mise en eau de la cale ou de la forme.

On connaît dans DE 2644856 et FR 2366984 un navire en béton transportant des réservoirs dans des compartiments en béton. Afin de minimiser la surface mouillée du navire, celui-ci présente un fond plat sur lequel reposent les parois de fond des compartiments. Et, les parois latérales des compartiments sont soutenues par des structures porteuses du type berceau.

On connaît aussi la barge en béton qui a été construite pour le champ d'Ardjuna (Indonésie) pour le stockage de gaz de pétrole liquéfié. Le gaz y est stocké à température de -45°C dans des réservoirs cylindriques autoporteurs, isolés thermiquement, de section circulaire en acier de moyenne épaisseur. Il s'agit de gaz butane ou propane seulement. Les réservoirs sont stockés sur deux niveaux : une série de six réservoirs est stockée sur le pont, une deuxième série de six réservoirs est stockée à l'intérieur de la coque. Chacun des réservoirs intégrés à la coque repose sur deux berceaux faisant partie de la structure en béton de la coque de la barge. Ces berceaux ont pour fonction de créer un supportage se rapprochant d'un système isostatique, minimisant ainsi les contraintes engendrées par les déformations différentielles entre le réservoir et la structure de la barge et permettant de transférer dans de bonnes conditions la charge correspondant au poids du réservoir et de son contenu, c'est à dire environ 3 000 tonnes, vers la coque de la barge, laquelle est soumise à la poussée d'Archimède sur l'intégralité de sa surface mouillée.

Dans cette configuration, ladite charge, répartie le long du réservoir est concentrée au niveau des berceaux, puis transférée à travers lesdits berceaux vers la coque de la barge engendrant des efforts concentrés importants et enfin la charge est répartie dans toute la zone active de la coque soumise à la poussée d'Archimède. Cette barge mesure environ 140 m de longueur, 40m de largeur et 16m de profondeur et permet de stocker environ 60.000 m³ de gaz répartis en 12 réservoirs calorifugés identiques.

Dans la zone de stockage des réservoirs calorifugés, les parois en béton correspondant au fond, aux bordés et aux parois sont donc dotées de structures de renfort comportant des poutres épaisses associées à des voiles béton qu'il est nécessaire de sur-dimensionner, au moins dans la zone de transition, de manière à ce que la répartition des efforts au reste de la structure de la coque puisse s'effectuer de manière satisfaisante.

Des barges en béton n'ont jamais été proposées à ce jour pour stocker des quantités de gaz supérieures à 60.000 m³ ni pour stocker des gaz liquéfiés à des températures plus basses que -50°C, c'est-à-dire pour des gaz autres que le butane ou le propane liquéfiés, notamment pour le méthane liquide.

Selon les techniques mises en oeuvre usuellement dans les barges dont la structure est en béton, la construction de barges géantes ne pourrait pas être extrapolée à partir de la technologie utilisée pour la barge Ardjuna car cela nécessiterait soit la multiplication de réservoirs de technologie classique, soit la réalisation de réservoirs géants en nombre réduit basés sur la technologie autoporteuse, mais présentant alors des difficultés de réalisation extrêmement importantes, voire même des impossibilités techniques, en raison des charges considérables à transférer au niveau des berceaux (supportage isostatique).

De tels réservoirs géants, pour les températures cryogéniques du méthane liquéfié (-165°C), présentent un raccourcissement de la paroi interne du réservoir important lors de la mise en froid, créant ainsi, au niveau desdits appuis, des déplacements différentiels entre ledit réservoir et la structure de la barge, laquelle reste à la température ambiante. La conception des supports devient alors très délicate car ils doivent être capables d'absorber ces mouvements sans engendrer de contraintes significatives qui pourraient créer des phénomènes de fatigue dans lesdits supports ou dans le réservoir et rendre ainsi dangereuse l'exploitation d'une telle barge. Ces phénomènes de retrait existent sur des petits réservoirs stockant du propane réfrigéré à -50°C, mais peuvent être maîtrisés par des appuis de conception adaptée. L'extrapolation de tels principes à des réservoirs géants travaillant à -165°C ou à des températures plus basses encore, conduirait à des systèmes de supportage extrêmement complexes nécessitant des renforcements très importants au niveau de la coque béton impliquant la mise en oeuvre de quantités de béton précontraint très importantes.

En outre, en dépit du bon comportement mécanique du béton, notamment lorsqu'il est en contact avec les gaz liquéfiés, le risque d'apparition de micro-fissurations dans les zones de contrainte maximale (berceaux de supportage) pouvant entraîner des infiltrations d'eau à travers la masse de la structure de béton, risquant de corroder les armatures métalliques dans le béton et de dégrader les performances du système d'isolation, avait dissuadé l'homme du métier d'utiliser de telles barges en béton pour le stockage de méthane liquéfié en mer.

On rappelle en effet que ces barges sont soumises à des contraintes mécaniques importantes sous l'effet des conditions d'environnement sur la coque (houle, vent, courant), ainsi que d'efforts considérables et très localisés créés par le système d'ancrage, en général situé au quatre coins de de la barge.

De plus, contrairement aux navires de type méthanier qui ne sont en général pas autorisés à naviguer à mi-charge, mais doivent être soit pratiquement vides (<10%), soit pratiquement pleins (>85%), un stockage flottant possède un niveau de chargement variable de 0% à 100% et doit assurer, quelque soit le niveau de chargement, un niveau de sécurité extrême.

On connaît dans US 4275679 des barges en béton pour le stockage de gaz liquéfié, qui présentent des réservoirs en béton de forme de calotte hémisphérique ou trois quarts sphérique, éventuellement surmontée par des cylindres circulaires disposés verticalement. Ces formes de réservoir qui comportent des courbures dans deux directions de l'espace, sont complexes à réaliser et imposent aussi des structures de ferraillage associés plus importantes et difficiles à réaliser car les réservoirs n'ont pas de parois latérales commune d'appui par lesquelles des réservoirs côte à côte pourraient se soutenir mutuellement. En outre, ces formes sphériques impliquent la mise en oeuvre d'une quantité de béton importante.

Le but de la présente invention est de fournir une barge de stockage en mer de gaz liquéfié, notamment de méthane, maintenu à des températures cryogéniques, notamment à des températures inférieures à -100°C.

Un autre but de la présente invention est de fournir des barges pouvant stocker des quantités importantes, notamment plus de 100.000 m³ de préférence plus de 200.000 m³ de gaz liquéfié.

Un autre but de la présente invention est de fournir une barge pouvant comporter, notamment, sur le pont supérieur, une unité de traitement de gaz, ledit gaz étant
- soit reçu sous forme gazeuse en provenance de puits de pétrole ou de puits de gaz, auquel cas il est traité puis liquéfié dans des unités spécialisées, avant d'être stocké dans les réservoirs internes de la barge,
- soit reçu sous forme liquide en provenance d'un méthanier, auquel cas il est transféré à bord et stocké dans les réservoirs internes de la barge, avant d'être soit réexpédié sous forme liquéfié dans d'autres méthaniers ; soit réexpédié sous forme gazeuse, après réchauffage dans des unités spécialisées, dans des conduites sous-marines pour être utilisé en un endroit éloigné de la barge de stockage ; soit enfin utilisé sur place pour produire de la chaleur, de l'énergie électrique, ou de l'énergie mécanique. Les énergies produites à partir du gaz peuvent être, soit utilisée à bord, soit exportées vers un emplacement éloigné par des conduites sous-marines ou des câbles électriques.

Le pont supérieur de la barge selon l'invention doit présenter une surface et une résistance suffisantes pour recevoir l'ensemble des installations de liquéfaction ou de regazéification, ainsi que les équipements de production d'énergie électrique, dont le poids total peut atteindre et dépasser 35 à 50 000 tonnes.

Un autre but de la présente invention est de fournir une barge qui puisse être construite soit par des chantiers navals en cale sèche, soit dans une forme spécialement creusée pour l'occasion, et ce, dans des conditions de coût et de temps compétitives économiquement avec les navires en acier.

Dans la mesure où l'utilisation d'acier pour la construction de supports flottants destinés à stocker du gaz naturel liquéfié à des températures inférieures à -100°C, sur le pont desquels sont installés des équipements de traitement de gaz augmente les risques liés à la fragilisation dc la structure en cas d'épandage de gaz liquéfié suite à des incidents dans les unités de liquéfaction ou de traitement de gaz, un problème à la base de la présente invention est aussi de fournir une structure en béton qui présente une résistance mécanique suffisante pour des incidents similaires, et en conséquence une meilleure sécurité de fonctionnement, et qui peut être construite dans les meilleures conditions de réalisation technique et économique, notamment en minimisant les quantités de béton à mettre en oeuvre.

Pour ce faire, la présente invention concerne une barge de stockage en mer de gaz liquéfié constituée essentiellement par une structure flottante en béton armé et précontraint contenant des réservoirs pour gaz liquéfié.

Selon l'invention, lesdits réservoirs sont des réservoirs cylindriques dont la section transversale perpendiculaire à leur axe principal longitudinal comporte une portion incurvée, de préférence circulaire, correspondant au fond dudit réservoir, ladite portion étant de préférence une demi circonférence inférieure, qui repose directement sur le fond en béton de la barge, lequel dit fond de la barge présente une forme de pluralité de calottes cylindriques adjacentes, chaque calotte cylindrique ayant la même section, partiellement incurvée, de préférence circulaire, en regard dudit fond de chaque réservoir.

Ledit fond des réservoirs suit le contour de la surface et donc, épouse de manière continue la forme dudit fond de la barge, lesdits fonds des réservoirs et de la barge ayant une forme de voûtes inversées adjacentes.

Sous l'effet des courants, de la houle et du vent, les mouvements créés de la barge créent des variations de contraintes dynamiques importantes successivement positives et négatives. Les réservoirs de stockage et la barge selon l'invention ont une forme dont leur partie basse en forme de voûtes inversées, notamment à secteurs circulaires adjacents, permet d'utiliser la pression hydrostatique de l'eau ambiante pour faire travailler la section transversale de la structure essentiellement en compression pure, et ce quelque soit le niveau du chargement des réservoirs, ce qui conduit à des économies considérables de matière au niveau du béton, des structures de renfort et des moyens de précontrainte. La barge de stockage selon la présente invention permet donc de minimiser les efforts transmis par les réservoirs de gaz sur la structure en béton de la coque de la barge, et d'éviter les concentrations de charge résultant du recours à des renforts de structure localisés, lesquelles impliqueraient des quantités de matière béton à mettre en oeuvre très importantes. La répartition des contraintes est optimale et permet à l'ensemble réservoir - structure béton de résister, pendant la durée de vie opérationnelle des installations, d'une part à la pression engendrée par le fluide, d'autre part aux effets dynamiques engendrés par les mouvements du support flottant sous l'effet des conditions d'environnement, et enfin aux diverses contraintes thermiques engendrées et ce, quelque soit le niveau de chargement des réservoirs cryogéniques. Le transfert de charge entre la cargaison de gaz liquéfié et la structure en béton de la coque de la barge se fait de manière uniforme et les contraintes transversales résultant dans le voile béton sont essentiellement des efforts de compression, ce qui présente un avantage considérable vis à vis des risques de fissuration et micro-fissuration existant dans tout ouvrage en béton, évitant de ce fait les risques de migration d'eau à travers la masse de la structure et les dégâts associés, au niveau de la corrosion desdites armatures et éventuellement au niveau du système d'isolation si le réservoir est un réservoir à membrane mince.

Dans un mode de réalisation préféré, ledit réservoir est un réservoir du type à membrane mince recouverte à l'extérieur d'un complexe isolant thermique, ledit complexe isolant reposant directement sur le fond en béton de la barge, la paroi béton étant d'épaisseur sensiblement constante et sans structure complémentaire de renfort sur toute la zone de soutien du réservoir.

Le gaz liquéfié est donc contenu dans un réservoir cylindrique constitué d'une membrane reposant sur un complexe isolant, le dit complexe isolant reposant directement sur la paroi extérieure ou sur les parois intermédiaires de la structure en béton de la barge. La structure en béton de la barge est constituée d'un voile béton d'épaisseur sensiblement constante au niveau des parois latérales et du fond en regard de toute la surface du réservoir considéré.

L'utilisation de réservoir à membrane mince contribue à améliorer le transfert de charge et réduire les contraintes mécaniques au niveau du réservoir, car ce type de réservoir présente une rigidité négligeable en comparaison de celle de la structure béton de la barge et de ce fait, la dite membrane possède une très grande capacité de déformation ce qui lui permet de suivre, sans accroissement significatif de contraintes toutes les déformations de la coque béton, que ce soient des flexions longitudinales, des flexions transversales ou des torsions.

L'association d'un système de structure béton performant, c'est à dire conduisant à une coque à structure en béton présentant un rapport flottabilité/poids propre élevé, avec un système de confinement-isolation ultra-léger et à très hautes performances, présente l'avantage de nécessiter pour la construction de la barge une cale sèche ou une forme moins profonde, ce qui autorise une construction dans ladite cale sèche ou la dite forme, jusqu'à un stade beaucoup plus avancée que dans l'art antérieur.

On pourra ainsi installer "au sec", une quantité plus importante d'équipements pondéreux, tels les ensembles et sous-ensembles requis sur le pont supérieur pour assurer le fonctionnement futur des installations. Une plus grande liberté dans le planning d'exécution de la construction sera ainsi apporté et la mise à flot de la structure pourra être repoussée au plus tard, ce qui permettra de limiter les opérations de finition à flot, en général plus coûteuses qu'à poste fixe. Ceci devient particulièrement intéressant lorsque la forme est creusée spécialement pour la construction de la barge, car il est alors possible de la creuser à une profondeur minimum, donc à un coût minimum et de plus son utilisation n'est en général pas limitée par l'impératif de devoir être libérée pour la construction du navire suivant, comme c'est habituellement le cas dans une cale sèche de chantier naval.

Dans un mode de réalisation, la barge comporte au moins deux, de préférence au moins trois réservoirs disposés longitudinalement côte à côte dans des compartiments séparés par des parois verticales latérales en béton de constitution et d'épaisseur au moins égales à celle de la paroi en béton du fond, et sans structure supplémentaire de renfort.

Avantageusement, les parois latérales des réservoirs viennent contre la surface des parois latérales verticales des compartiments de la structure en béton de la barge, dans lesquelles lesdits réservoirs sont confinés, de sorte que les parois de deux réservoirs adjacents qui viennent en appui latéral sur une même paroi intermédiaire verticale de leurs compartiments, se soutiennent mutuellement.

Selon une autre caractéristique de la présente invention, les points d'ancrage des câbles de précontrainte dudit béton précontraint sont situés en dehors de ladite paroi de fond incurvé de la structure en béton, et de préférence en dehors des parois latérales verticales en béton entourant le réservoir.

De préférence, les points d'ancrage des câbles de précontrainte selon le plan transversal de la barge sont situés à l'extrémité supérieure des parois verticales latérales en béton qui entourent les réservoirs. Dans cette position ils sont facilement accessibles, et les câbles de précontrainte peuvent être mis en tension au moment le plus opportun de la construction de la barge en béton, ce qui autorise le démarrage de la fabrication du système d'isolation et du réservoir bien avant que la structure béton ne soit terminée. Les points d'ancrage des câbles de précontrainte parallèles à l'axe de la barge sont, quant à eux, situés dans les zones de stockage non cryogéniques adjacentes, réservées aux consommables, à l'eau douce, aux ballasts, ou encore réservés à des locaux techniques. Dans le cas des barges géantes, l'épaisseur des parois des compartiments de la structure en béton dans lesquels sont confinés lesdits réservoirs, laquelle épaisseur n'excède en général pas 70 cm, permet tout de même de superposer les nappes d'armatures métalliques et les gaines des divers câbles de précontrainte, de telle manière que les câbles servant à pré-contraindre la voûte soient remontés au niveau de la partie supérieure de la structure en béton de la barge. En procédant ainsi, lors de la construction de la structure béton, on est en mesure de libérer très tôt la zone des stockages cryogéniques où doivent être installés les réservoirs et ) notamment les membranes de confinement et les systèmes d'isolation thermique, ce qui permet de réduire de manière très significative le temps global de construction de la barge, car l'installation du système d'isolation, qui constitue l'élément le plus délicat et, étant long à être mis en oeuvre peut être initié à un stade beaucoup plus précoce de la construction. En effet, le système d'isolation associé à sa membrane doit être assemblé sur place à partir de panneaux préfabriqués unitaires mesurant en général quelques m² chacun. La membrane ainsi constituée est assemblée par soudage directement en place, alors que dans l'art antérieur les réservoirs sont préfabriqués et mis en place en un nombre minimum de colis et donc de levages, ce qui nécessite une liberté d'accès et par conséquent implique l'installation desdits réservoirs avant que ne puisse être construit la partie supérieure de la barge.

Dans un mode de réalisation avantageux, lesdits réservoirs cylindriques et lesdits compartiments de la structure en béton dans lesquels ils sont confinés ont une section transversale perpendiculaire à leur axe longitudinal principal comportant dans leur partie supérieure deux pans coupés latéraux inclinés correspondant à des parois planes latérales inclinées desdits compartiments reposant sur l'extrémité supérieure desdites parois latérales verticales desdits compartiments et assurant la jonction entre lesdites parois latérales verticales et une paroi horizontale supérieure desdits compartiments.

Dans un mode de réalisation préféré, les parois desdits réservoirs sont appliquées contre les parois desdits compartiments dans lesquels ils sont confinés, c'est-à-dire que toutes les parois desdits réservoirs suivent le contour et épousent de manière continue la forme de la surface interne des parois correspondantes des compartiments de la structure en béton de la barge.

Lesdits compartiments et de préférence, lesdits. réservoirs comprennent donc :
- dans leur partie inférieure : une calotte cylindrique à section, de préférence demi-circulaire,
- dans leur partie supérieure :
   . deux parois latérales verticales,
   . deux parois latérales inclinées,
   . une paroi supérieure horizontale.

Cette configuration permet de réduire les remous du gaz liquide dans le réservoir quand celui-ci n'est pas entièrement rempli.

Les points d'ancrage des câbles transversaux de précontrainte sont avantageusement situés à la base des parois inclinées, toujours à l'extérieur des compartiments des réservoirs, les câbles longitudinaux de précontrainte étant avantageusement situés dans les réservoirs ou zones de stockage adjacentes non cryogéniques.

Avantageusement, la structure en béton comprend des quilles antiroulis au niveau de ses bordés.

Avantageusement encore, la structure en béton comprend dans sa partie supérieure, au-dessus des compartiments renfermant lesdits réservoirs, une zone constituée de caissons parallélépipédiques formant la structure principale de la barge et assurant la rigidité d'ensemble.
Le pont supérieur de la barge présente une résistance suffisante pour recevoir l'ensemble des installations de liquéfaction ou de regazéification, ainsi que les équipements de production d'énergie électrique, dont le poids total peut dépasser 50 000 tonnes.

Dans un mode de réalisation préféré, les parois en béton autour du réservoir, de préférence les parois latérales verticales intermédiaires entre deux desdits réservoirs comportent un système de chauffage intégré dans la masse du béton. Ceci permet de limiter le refroidissement de la paroi. En effet, les déperditions frigorifiques à travers le système d'isolation du réservoir, ont pour effet de refroidir le béton, ce refroidissement n'étant limité que par l'apport de calories en provenance, soit de la partie basse de la coque en béton de la barge en contact avec l'eau de mer, soit de la partie haute en contact avec l'air ambiant, soit enfin par un apport complémentaire de calories directement au sein de la masse de béton. Il est impératif de limiter le refroidissement du béton, car en deçà d'une certaine valeur, les armatures en acier deviennent fragiles et diminuent de manière très significative la résistance de la structure. Lesdites armatures peuvent être sélectionnées pour résister à des températures très basses, mais leur coût devient alors très élevé, on préfère donc limiter les baisses exceptionnelles de température à des valeurs de l'ordre de -10 à -20°C, la température habituelle de la structure devant se situer de préférence autour de 0°C à +5°C.

L'apport de calories peut être réalisé par incorporation dans le béton de câbles électriques chauffants, de tubes véhiculant un fluide chaud, ou encore par injection de courant électrique directement dans les câbles de précontraintes, notamment ceux que l'on souhaite protéger en priorité. Un tel apport de calories peut aussi être réalisé passivement par simple conduction de la chaleur le long de câbles noyés dans la masse de béton et en liaison avec l'eau de mer ambiante.

Dans une version préférée de l'invention, le système de chauffage est un dispositif autonome de chauffage par cycle thermo-dynamique sans apport d'énergie thermique extérieure, comprenant des canalisations dans la masse du béton qui débouchent dans un réservoir présentant une grande surface d'échange de calories avec l'eau de mer en partie basse à l'extérieur, sous la structure en béton, lesdites canalisations et ledit réservoir d'échange de calories avec l'eau comprenant un fluide frigorigène qui circule et effectue le transfert de calories entre une source froide constituée par la masse du béton à réchauffer et une source chaude que constitue l'eau de mer ambiante.

La barge en béton précontraint pour gaz liquéfiés cryogéniques selon l'invention est destinée préférentiellement aux stockage géants de plus de 100.000 m³ de gaz liquéfiés à des températures inférieures à -100°C et pouvant atteindre et dépasser un volume global de 300 000 m3. Une telle barge mesure environ 250 à 300m de long, par 60 à 70m de largeur et 25 à 30m de creux.

La barge selon l'invention peur comprendre un pont supérieur pouvant recevoir des installations de liquéfaction ou de regazéification, ou des équipements de production d'énergie électrique.

D'autres caractéristiques et avantages de la présente invention apparaîtront à la lumière de la description détaillée qui va suivre, en référence aux figures suivantes dans lesquelles :
- la figure 1 est une coupe transversale en vue de côté d'une barge en béton selon l'invention, pour stockage cryogénique ;
- la figure 2 est une section en vue en plan d'une barge correspondant à la figure 1 détaillant les diverses citernes de stockage cryogéniques,
- la figure 3 est une section de la paroi de la barge selon la figure 1, sur laquelle est appliqué un réservoir à membrane mince ,
- la figure 4 est une vue en coupe de la paroi verticale latérale intermédiaire des compartiments renfermant les réservoirs cryogéniques de gaz liquéfié, équipée d'un maillage de réchauffage mixte à l'électricité et par circulation d'eau chaude,
- la figure 5 est une vue en coupe de la cloison intermédiaire en béton de la figure 4, mais comportant un système de chauffage autonome par cycle thermodynamique,

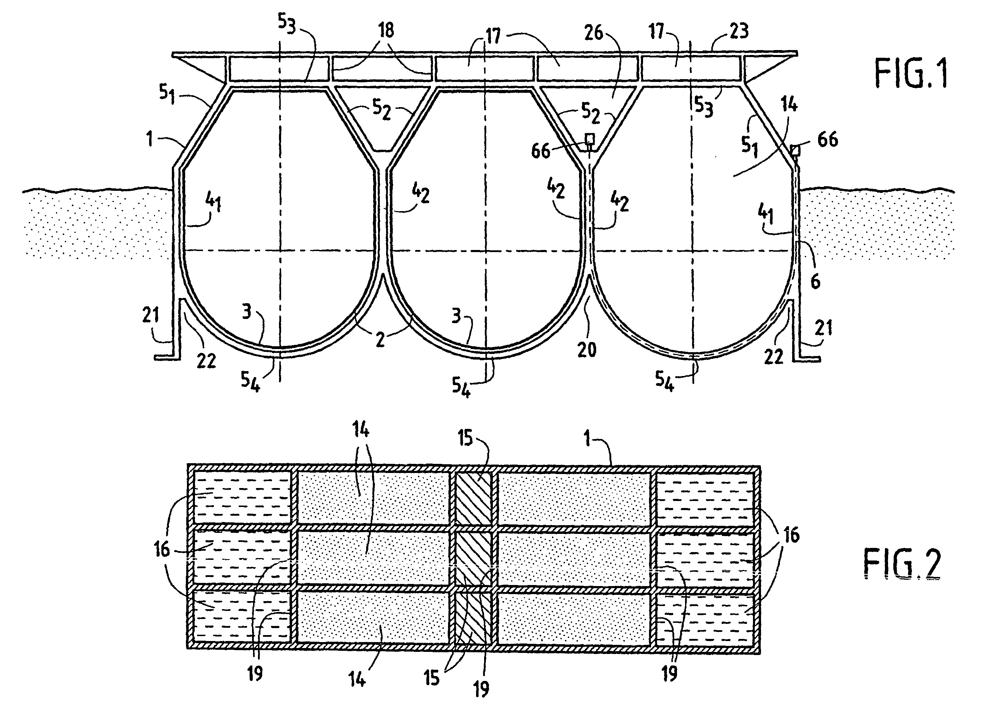

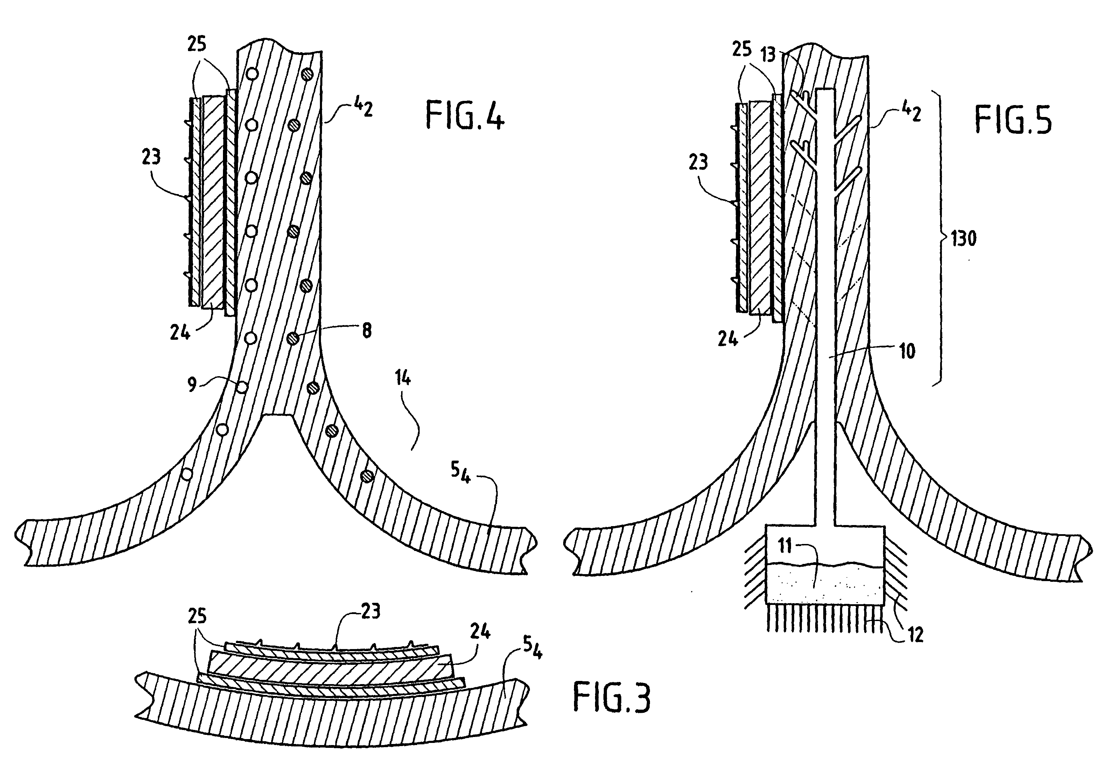

La barge selon l'invention représentée sur les figures 1 et 2 comprend une structure en béton 1 réalisée en béton armé avec des armatures métalliques et précontraint à l'aide de câbles. Elle comprend, tel que représenté, six réservoirs 2 de stockage cryogéniques disposés dans des compartiments 14. La paroi des réservoirs 2 est représentée schématiquement sur la figure 3 et sera décrite ci-après.

La barge selon l'invention présente un profil de section transversale représenté figure 1, constant tout le long de la zone de stockage du gaz liquéfié, avec des voiles transversaux 19 délimitant, dans sa partie inférieure partiellement immergée, comme montré figure 2 :
- des compartiments 14 destinés à contenir les réservoirs cryogéniques 2,
- des compartiments 15 qui peuvent être de forme similaire aux compartiments 14 ou de forme parallélépipédique pour le stockage d'autres fluides tels que le gazole, l'eau douce ou tout autre produit tel que les condensats ou les butanes et propanes qui peuvent être stockés soit en réservoirs réfrigérés autoporteurs ou dans des réservoirs sous pression à température ambiante, et
- des ballasts 16, de forme quelconque, remplis d'eau.

La partie inférieure de la barge constituant la coque en béton partiellement immergée renferme des compartiments 14 pour réservoirs de gaz liquéfié 2 dont le fond 3 est en forme de calottes cylindriques adjacentes constituant des voûtes inversées adjacentes. Les parois des réservoirs 2 sont directement appliqués contre les parois 4₁, 4₂, 5₁, 5₂, 5₃, 5₄ des compartiments 14 en béton. Les parois des compartiments 14 comprennent donc :
- une paroi de fond 5₄ de forme de calotte cylindrique à section circulaire,
- des parois latérales verticales qui peuvent être les bordés 4₁ de la barge ou une cloison intermédiaire 4₂ entre deux compartiments adjacents,
- des parois supérieures 5₁, 5₂, 5₃ planes représentées par des pans coupés sur la coupe de la figure 1 comprenant :
   - des parois latérales supérieures 5₁, 5₂ inclinées vers le plan de symétrie verticale des compartiments 14 et réservoirs 2,
   - des parois supérieures horizontales 5₃ rejoignant les extrémités supérieures des parois supérieures latérales inclinées 5₁, 5₂.

Les parois intermédiaires 42 peuvent être doublées pour des raisons d'inspection ou pour améliorer le contrôle de la température des voiles béton. De la même manière, les bordés 4₁ de la barge peuvent être doublés pour assurer une protection mécanique contre les chocs externes provoqués, par exemple, par des navires de travail ou des navires de transport de gaz liquéfiés venant à couple de la barge pour charger ou décharger ledit gaz liquéfié.

Les points d'ancrage 66 des câbles de précontrainte 6 sont situés à la base des parois latérales supérieures inclinées 5₁, 5₂ à l'extrémité supérieure des parois latérales verticales 4₁, 4₂ des compartiments 14 et à l'intérieur des compartiments 26.

Dans la partie inférieure de la barge et de préférence au niveau des bordés de la barge, on installe avantageusement des extensions de structure, continues ou non sur toute la longueur de la barge, jouant le rôle de quille antiroulis 21. Les quilles antiroulis ont pour fonction de créer un amortissement du roulis de la barge, d'une part par augmentation de l'inertie globale du système par masse d'eau ajoutée, et d'autre part par dissipation d'énergie par création de tourbillons vers l'extrémité de ladite quille antiroulis. On peut augmenter avantageusement le niveau d'énergie créé par les tourbillons en effectuant des trous dans la quille antiroulis. La technique des quilles antiroulis étant connu de l'homme de l'art dans le domaine de la construction navale, ne sera pas développé plus en détails ici

La forme en voûtes inversées adjacentes des parois de fond 5₄ des compartiments 14 permet de limiter encore le tirant d'eau nécessaire lors de la mise en eau, après remplissage complet de la cale sèche ou de la forme, en injectant de l'air sous la coque. Ledit air se trouvera piégé dans les points hauts 20 existant entre deux réservoirs cylindriques et les points hauts 22 existant entre un réservoir cylindriques latéral et la quille antiroulis 21. Le surplus de flottabilité ainsi créé permet d'évacuer la barge vers un emplacement où le tirant d'eau est suffisant pour assurer une flottabilité acceptable après évacuation dudit air injecté.

La partie supérieure de la barge au-dessus des compartiments 14 renfermant les réservoirs cryogéniques 2 comprend un pont supérieur 23 supporté par des éléments en forme de seconds caissons parallélépipédiques 17 dont les parois verticales 18 constituent des renforts longitudinaux de structure et permettent de supporter des installations telles que des équipements de liquéfaction, des équipements de regazéification ou encore des équipements de transfert ou de production d'énergie électrique ainsi que tous les équipements nécessaires à la logistique des installations et du personnel, installés sur le pont supérieur 23, dont le poids total cumulé peut dépasser 50 000 tonnes.

Des compartiments de forme à section triangulaire 26 au-dessus des parois latérales verticales 4₂ sont délimités par les parois latérales inclinées 5₁, 5₂ de deux compartiments 14 adjacents et le plancher desdits seconds caissons 17. Ces compartiments 26 permettent d'accéder aux points d'ancrage des câbles de précontrainte et peuvent être utilisés partiellement pour des stockages.

La barge représentée figures 1 et 2 contient six réservoirs de 50.000 m³ chacun et sa taille est de 250 à 300 m de long pour 60 à 70 m de large et 25 à 30 m de hauteur. La paroi en béton a une épaisseur d'environ 60 à 70 cm dans la partie correspondant au voile supportant les réservoirs cryogéniques. Les autres réservoirs comportent des voiles d'épaisseur variable associés éventuellement à des poutres de renforcement.

Sur la figure 3 on a représenté schématiquement la configuration des parois d'un type de réservoir à membrane mince connue de l'homme de l'art. La membrane mince 23, de préférence en acier inoxydable, est une tôle mince de 0.5 à 2 mm d'épaisseur présentant, de préférence, des ondulations destinées à absorber les déformations dues aux variations extrêmes de température. Cette membrane repose sur un complexe isolant constitué de blocs de matière synthétique, notamment de la mousse de polyuréthane 24, entre deux plaques de matériau semi-rigide 25 de type contreplaqué.

Sur les figures 4 et 5, on a représenté divers systèmes de chauffage des parois intermédiaires 4₂ des compartiments 14 des réservoirs cryogéniques 2, car ces parois ne sont jamais en contact direct avec l'eau de mer et ont tendance à se refroidir compte tenu de leur environnement cryogénique.

Sur la figure 4 on a représenté sur la gauche un maillage de tubes 9 dans lesquels circule un fluide caloporteur et sur la droite un maillage de câbles électriques 8 disposés en quinconce.

Sur la figure 5, on a représenté un dispositif de chauffage par cycle thermo-dynamique qui comprend des canalisations verticales 10 incorporées dans les parois intermédiaires 4₂ des compartiments 14, la cloison 10 comprenant des ramifications sous forme d'extension tubulaire 13 au sein de la paroi intermédiaire 4₂. Au bas de la canalisation 10, immergé dans l'eau, se trouve un réservoir d'échange calorique 11 comprenant des ailettes 12 constituant ainsi une grande surface d'échange avec l'eau ambiante.

L'ensemble canalisation 10 réservoir 11 est disposé de telle manière qu'il ne comporte qu'un seul point bas situé au bas du réservoir. Il est rempli d'un fluide frigorigène sélectionné de manière à se liquéfier à une température correspondant à la valeur minimum souhaitée pour la protection du voile. Le transfert de calories s'effectue alors de la manière suivante : a) le gaz présent dans la tuyauterie 10 se condense dans les zones froides 130 en apportant des calories au béton et, par la réduction de volume il se crée une dépression ; b) le condensat ruisselle le long de la tuyauterie 10 et par simple gravité se dirige vers le réservoir 11 en raison de l'absence de point bas le long du parcours ; c) le condensat au contact de la paroi dudit réservoir, lui-même au contact de l'eau ambiante 12, se réchauffe et se vaporise ; d) le fluide ainsi revaporisé compense la perte de pression et pousse le gaz vers les zones froides à réchauffer. On sélectionne le type de fluide frigorigène en fonction de la température minimale de l'eau ambiante ainsi que de la température de protection que l'on souhaite pour le voile en béton. A titre d'exemple, le butane permet de remplir la fonction de fluide frigorigène et permet un transfert de calories entre la source chaude (eau ambiante) et la source froide (voile béton). De nombreux fluides ont été développés par l'industrie frigorifique pour s'adapter de manière optimale à diverses configurations de sources chaudes et de sources froides. Le dispositif est auto-adaptatif et fonctionne de manière continue sans autre apport d'énergie extérieure que l'eau ambiante, ce qui présente un avantage considérable par rapport à la technologie de réchauffage utilisant le courant électrique ou un fluide chaud, lesquels engendrent en général, pour leur production, des gaz à effet de serre tels les CO/CO2.

La capacité de transfert en calorie est conditionné principalement par les surfaces d'échange dans la zone froide du voile béton et les surfaces d'échange dans la zone chaude de l'eau ambiante. A cet effet, le faisceau tubulaire noyé dans le béton est avantageusement ramifié, chacune desdites ramifications ne devant présenter aucun point bas de manière à ce que les condensats redescendent vers le réservoir bas par simple gravité. De la même manière, la surface d'échange avec l'eau ambiante est améliorée, soit par de multiples ailettes ou encore par circulation forcée de l'eau au moyen d'agitateurs ou de pompes, par exemple au niveau d'un échangeur de chaleur.

Ce nouveau concept de barge est adapté à tous types de stockage cryogéniques, en particulier au stockage des hydrocarbures liquéfiés, tels que le méthane, le butane et le propane, mais aussi tout autre gaz tels que l'hydrogène, l'azote, l'oxygène, les gaz rares, ou encore les gaz produits par l'industrie chimique tels que l'éthylène ou l'ammoniac.

Ce nouveau type de barge peut être un support flottant maintenu en flottaison sur site par un système d'ancrage, mais il peut tout aussi bien être fabriqué puis remorqué sur site et enfin être ballasté pour reposer sur un fond préalablement préparé et rester fixe par rapport au sol pendant toute sa durée de vie opérationnelle. Lors de la démobilisation de la barge il suffit alors de le remettre en flottaison par injection d'air comprimé dans la zone des parties voûtées sous la coque. La barge peut alors être remorquée pour être installée sur un autre site.

## Revendications

1. Barge de stockage en mer de gaz liquéfié constituée essentiellement par une structure flottante (1) en béton armé et précontraint contenant des réservoirs (2) pour gaz liquéfié, **caractérisée en ce que** lesdits réservoirs (2) sont des réservoirs cylindriques dont la section transversale perpendiculaire à leur axe principal longitudinal comporte une portion incurvée, de préférence circulaire, correspondant au fond (3) dudit réservoir, ladite portion étant de préférence une demi circonférence inférieure, qui repose directement sur le fond en béton de la barge (5₄), lequel fond présente une forme de pluralité de calottes cylindriques adjacentes, chaque calotte cylindrique ayant la même section partiellement incurvée, de préférence circulaire, en regard dudit fond (3) de chaque réservoir.

2. Barge de stockage de gaz liquéfié constituée essentiellement par une structure flottante en béton selon la revendication 1, **caractérisée en ce que** ledit réservoir est un réservoir (2) du type à membrane mince (23) recouverte à l'extérieur d'un complexe isolant thermique (24, 25), ledit complexe reposant directement sur le fond en béton (5₄) de la barge, la paroi béton dudit fond de la barge (5₄) étant d'épaisseur sensiblement constante et sans structure supplémentaire de renfort sur toute la zone de soutien du réservoir.

3. Barge de stockage selon l'une des revendications 1 ou 2, **caractérisée en ce qu'**elle comporte au moins deux, de préférence au moins trois réservoirs (2) disposés longitudinalement côte à côte dans des compartiments (14) de la structure en béton de la barge séparés par des parois verticales latérales en béton (4₁, 4₂), de constitution et d'épaisseur au moins égales à celles de la paroi en béton (5₄) dudit fond en béton de la barge, et sans structure supplémentaire de renfort.

4. Barge de stockage selon l'une des revendications 1 à 3, **caractérisée en ce que** lesdits réservoirs (2) cylindriques et les compartiments (14) de la structure en béton dans lesquels ils sont confinés, ont une section transversale perpendiculaire à leur axe longitudinal principal comportant dans leur partie supérieure deux pans coupés latéraux inclinés correspondant à des parois planes inclinées (5₁, 5₂) desdits compartiments, lesdites parois inclinées reposant sur l'extrémité supérieure des parois latérales verticales (4₁, 4₂) desdits compartiments (14) et assurant la jonction entre lesdites parois verticales latérales (4₁, 4₂) et une paroi horizontale supérieure (5₃) desdits compartiments (14).

5. Barge de stockage selon l'une des revendications 1 à 4, **caractérisé en ce que** les parois desdits réservoirs (2) sont appliquées directement contre les parois (4₁, 4₂, 5₁, 5₂, 5₃, 5₄) desdits compartiments (14) à l'intérieur desquels ils sont confinés.

6. Barge de stockage selon l'une des revendications 1 à 5, **caractérisée en ce que** les points d'ancrage (66) des câbles de précontrainte (6) dudit béton précontraint sont situés en dehors de ladite paroi de fond incurvé (5₄) de la structure en béton, et de préférence en dehors des parois latérales verticales (4₁, 4₂) en béton entourant les réservoirs.

7. Barge de stockage selon la revendication 6, **caractérisée en ce que** les points d'ancrage (66) des câbles de précontrainte (6) selon le plan transversal de la barge sont situés à l'extrémité supérieure des parois verticales latérales (4₁, 4₂) en béton qui entourent les réservoirs (2).

8. Barge de stockage selon l'une des revendications 1 à 7, **caractérisée en ce que** les parois en béton desdits compartiments, de préférence les parois verticales latérales intermédiaires (4₂) entre deux réservoirs, comportent un système de chauffage intégré dans la masse du béton.

9. Barge de stockage selon la revendication 8, **caractérisée en ce que** le système de chauffage est réalisé par incorporation dans le béton de câbles électriques chauffants (8), ou par injection de courant électrique dans les câbles de précontrainte, ou des tubes véhiculant un fluide chaud (9), ou par conduction de la chaleur le long de câbles noyés dans la masse du béton et en liaison avec l'eau de mer.

10. Barge de stockage selon la revendication 9, **caractérisée en ce que** le système de chauffage est un dispositif autonome de chauffage par cycle thermo-dynamique sans apport d'énergie thermique extérieure, comprenant des canalisations (10) dans la masse du béton qui débouchent dans un réservoir (11) présentant une grande surface d'échange (12) de calories avec l'eau de mer en partie basse à l'extérieur, sous la structure en béton, lesdites canalisations (10) et ledit réservoir d'échange (11) de calories avec l'eau comprenant un fluide frigorigène qui circule et effectue le transfert de calories entre une source froide constituée par la masse du béton à réchauffer et une source chaude que constitue l'eau de mer ambiante.

11. Barge de stockage selon l'une des revendications 1 à 10, **caractérisée en ce qu'**elle permet de stocker plus de 100.000 m³ de gaz liquéfié à température inférieure à -100°C.

12. Barge selon l'une des revendications 1 à 11, **caractérisé en ce qu'**elle comprend un pont supérieur pouvant recevoir des installations de liquéfaction ou de regazéification, ou des équipements de production d'énergie électrique.

## Patentansprüche

1. Leichter zum Lagern von Flüssiggas auf See, der im Wesentlichen aus einer schwimmfähigen Struktur (1) aus Spann- und Stahlbeton gebildet ist, die Behälter (2) für Flüssiggas umfasst,
**dadurch gekennzeichnet, dass** die Behälter (2) zylindrische Behälter sind, deren Querschnitt senkrecht zu ihrer Hauptlängsachse einen gebogenen, vorzugsweise kreisförmigen Abschnitt aufweist, der dem Boden (3) des Behälters entspricht, wobei dieser Abschnitt vorzugsweise eine untere Kreisumfangshälfte ist, die unmittelbar auf dem Betonboden des Leichters (5₄) ruht, welcher die Form einer Vielzahl benachbarter zylindrischer Kalotten aufweist, wobei jede zylindrische Kalotte denselben teilweise gebogenen, vorzugsweise kreisförmigen Querschnitt gegenüber dem Boden (3) eines jeden Behälters hat.

2. Leichter zum Lagern von Flüssiggas, der im Wesentlichen aus einer schwimmfähigen Struktur aus Beton nach Anspruch 1 gebildet ist,
**dadurch gekennzeichnet, dass** der Behälter ein Behälter (2) nach Art eines Behälters mit dünner Membran (23) ist, die außen mit einem wärmeisolierenden Verbundstoff (24, 25) überzogen ist, wobei der Verbundstoff unmittelbar auf dem Betonboden (5₄) des Leichters ruht, die Betonwand des Bodens des Leichters (5₄) im Wesentlichen eine konstante Dicke. und keine zusätzliche Verstärkungsstruktur in dem gesamten Stützbereich des Behälters hat.

3. Lagerleichter nach einem der Ansprüche 1 oder 2,
**dadurch gekennzeichnet, dass** er wenigstens zwei, vorzugsweise wenigstes drei Behälter (2) umfasst, die in Längsrichtung nebeneinander in Kammern (14) der Betonstruktur des Leichters angeordnet sind, welche durch vertikale Seitenwände aus Beton (4₁, 4₂) voneinander getrennt sind, deren Ausbildung und Dicke mindestens der der Betonwand (5₄) des Betonbodens des Leichters entspricht und die keine zusätzliche Verstärkungsstruktur aufweisen.

4. Lagerleichter nach einem der Ansprüche 1 bis 3,
**dadurch gekennzeichnet, dass** die zylindrischen Behälter (2) und die Kammern (14) der Betonstruktur, von denen diese umschlossen sind, einen Querschnitt senkrecht zur Hauptlängsachse haben, der in ihrem oberen Teil zwei geneigte seitliche schräge Kanten aufweist, die geneigten ebenen Wänden (5₁, 5₂) der Kammern entsprechen, wobei die geneigten Wände auf dem oberen Ende der vertikalen Seitenwände (4₁, 4₂) der Kammern (14) ruhen und die Verbindung zwischen diesen vertikalen Seitenwänden (4₁, 4₂) und einer oberen horizontalen Wand (5₃) der Kammern (14) herstellen.

5. Lagerleichter nach einem der Ansprüche 1 bis 4,
**dadurch gekennzeichnet, dass** die Wände der Behälter (2) unmittelbar an den Wänden (4₁, 4₂, 5₁, 5₂, 5₃, 5₄) der Kammern (14) anliegen, von denen diese umschlossen sind.

6. Lagerleichter nach einem der Ansprüche 1 bis 5,
**dadurch gekennzeichnet, dass** die Verankerungspunkte (66) der Vorspannkabel (6) des Spannbetons außerhalb der gebogenen Bodenwände (5₄) der Betonstruktur, und vorzugsweise außerhalb der die Behälter umgebenden vertikalen Seitenwände (4₁, 4₂) aus Beton liegen.

7. Lagerleichter nach Anspruch 6,
**dadurch gekennzeichnet, dass** die Verankerungspunkte (66) der Vorspannkabel (6) gemäß dem Spantenriss des Leichters am oberen Ende der die Behälter (2) umgebenden vertikalen Seitenwände (4₁, 4₂) aus Beton liegen.

8. Lagerleichter nach einem der Ansprüche 1 bis 7,
**dadurch gekennzeichnet, dass** die Betonwände der Kammern, vorzugsweise die zwischen zwei Behältern liegenden vertikalen Seitenwände (4₂) ein Heizsystem umfassen, das in der Betonmasse integriert ist.

9. Lagerleichter nach Anspruch 8,
**dadurch gekennzeichnet, dass** das Heizsystem durch Einlegen elektrischer Heizkabel (8) in den Beton oder durch Injektion von Strom in die Vorspannkabel oder durch ein Wärmeübertragungsmittel transportierende Rohre (9) oder durch Wärmeübertragung entlang der in der Betonmasse eingebetteten Kabel in Verbindung mit dem Meerwasser ausgeführt ist.

10. Lagerleichter nach Anspruch 9,
**dadurch gekennzeichnet, dass** das Heizsystem eine unabhängige Heizvorrichtung mit thermodynamischem Kreislauf ohne Zufuhr von äußerer Wärmeenergie ist, das in der Betonmasse Leitungen (10) umfasst, die in einen Behälter (11) münden, der außerhalb im unteren Teil unterhalb der Betonstruktur eine große Oberfläche zum Austausch (12) der Wärme mit dem Meerwasser aufweist, wobei die Leitungen (10) und der Behälter zum Wärmeaustausch (11) mit dem Wasser ein Kühlmittel umfassen, das zirkuliert und die Wärme zwischen einer durch die zu erwärmende Betonmasse gebildeten kalten Quelle und einer warmen Quelle überträgt, welche das umgebende Meerwasser bildet.

11. Lagerleichter nach einem der Ansprüche 1 bis 10,
**dadurch gekennzeichnet, dass** er mehr als 100.000 m³ Flüssiggas bei einer Temperatur von -100°C zu lagern erlaubt.

12. Lagerleichter nach einem der Ansprüche 1 bis 11,
**dadurch gekennzeichnet, dass** er ein Oberdeck, das Anlagen zur Verflüssigung oder Rückvergasung aufnehmen kann, oder Einrichtungen zur Erzeugung von elektrischer Energie umfasst.

## Claims

1. A barge for storing liquefied gas at sea, the barge being essentially constituted by a floating structure (1) of reinforced and prestressed concrete containing tanks (2) for liquefied gas, and being **characterized in that** said tanks (2) are cylindrical tanks of cross-section perpendicular to their main longitudinal axes that includes a preferably circular curved portion corresponding to the bottom (3) thereof, said portion being preferably a bottom half-circumference resting directly on the concrete bottom (5₄) of the barge, with the bottom of the barge being in the form of a plurality of adjacent part-cylindrical troughs, each part-cylindrical trough having the same preferably circular partially curved section facing the bottom (3) of each tank.

2. A barge for storing liquefied gas and constituted essentially by a concrete floating structure according to claim 1, **characterized in that** said tank is a tank (2) of the type having a thin membrane (23) covered on the outside in a thermally insulating complex (24, 25), said complex resting directly against the concrete bottom (5₄) of the barge, the concrete wall of said barge bottom (5₄) being of substantially constant thickness and without any additional reinforcing structure over the entire tank-supporting zone.

3. A storage barge according to claim 1 or 2, **characterized in that** it has at least two and preferably at least three tanks (2) disposed longitudinally side by side in compartments (14) of the concrete structure of the barge and separated by vertical side walls of concrete (4₁, 4₂), of structure and thickness not less than those of the concrete wall (5₄) of said concrete bottom of the barge, and without any additional reinforcing structure.

4. A storage barge according to any one of claims 1 to 3, **characterized in that** said cylindrical tanks (2) and the compartments (14) of the concrete structure in which they are confined have a cross-section perpendicular to their main longitudinal axes, the top portions of said cross-sections comprising two sloping side cants corresponding to sloping plane walls (5₁, 5₂) of said compartments, said sloping walls resting on the top ends of vertical side walls (4₁, 4₂) of said compartments (14) and connecting said side vertical walls (4₁, 4₂) to a top horizontal wall (5₃) for each of said compartments (14).

5. A storage barge according to any one of claims 1 to 4, **characterized in that** the walls of said tanks (2) are applied directly against the walls (4₁, 4₂, 5₁, 5₂, 5₃, 5₄) of said compartments (14) inside which they are confined.

6. A storage barge according to any one of claims 1 to 5, **characterized in that** the anchor points (66) for the prestress cables (6) of said prestressed concrete are situated outside said curved bottom wall (5₄) of the concrete structure, and preferably outside the side vertical walls (4₁, 4₂) of concrete surrounding the tanks.

7. A storage barge according to claim 6, **characterized in that** the anchor points (66) of the prestress cables (6) are situated, in the cross-section plane of the barge, at the top ends of the side vertical walls (4₁, 4₂) of concrete surrounding the tanks (2).

8. A storage barge according to any one of claims 1 to 7, **characterized in that** the concrete walls of said compartments, preferably the intermediate side vertical walls (4₂) between two tanks, include a heating system embedded in the concrete.

9. A storage barge according to claim 8, **characterized in that** the heating system is implemented by incorporating heating electricity cables (8) in the concrete, or by injecting electricity into the prestress cables, or by tubes conveying a hot fluid (9), or by conducting heat along cables embedded in the concrete and in connection with the sea water.

10. A storage barge according to claim 9, **characterized in that** the heating system is a self-contained heating device using a thermodynamic cycle without any external heat energy being supplied thereto, the device comprising pipework (10) embedded in the concrete and opening out into a tank (11) having a large heat exchange area (12) with the sea water at the bottom and on the outside beneath the concrete structure, said pipework (10) and said tank for heat exchange with the water containing a refrigerant which circulates and transfers heat between a hot source constituted by the surrounding sea water and a cold source constituted by the mass of concrete to be heated.

11. A storage barge according to any one of claims 1 to 10, **characterized in that** it enables more than 100,000 m³ of liquefied gas to be stored at a temperature below -100°C.

12. A barge according to any one of claims 1 to 11, **characterized in that** it has a top deck suitable for receiving liquefaction or regasification installations or equipment for producing electricity.
